# FASCICULE DE BREVET EUROPEEN

(11) **EP 3 581 745 B1**
(45) Date de publication et mention de la délivrance du brevet: **02.11.2022**
(21) Numéro de dépôt: 19173474.8
(22) Date de dépôt: 09.05.2019
(51) Int. Cl.: E05D 5/02, F16B 37/04

(54) **DISPOSITIF DE FIXATION À CLAMEAU POUR FERRURE**
KLAMMERHAKEN-BEFESTIGUNGSVORRICHTUNG FÜR BESCHLÄGE
HOOK ATTACHMENT DEVICE FOR FITTING

(30) Priorité: 12.06.2018 FR 1855134
(43) Date de publication de la demande: 18.12.2019
(73) Titulaire: FERCO, 57445 Reding (FR)
(72) Inventeur: GIESSINGER, Vincent, 57930 MITTERSHEIM (FR)
(74) Mandataire: Rhein, Alain

(56) Documents cités:
- EP-A1- 3 263 813
- EP-A2- 2 159 356

## Description

L'invention concerne un dispositif de fixation pour ferrure dans une rainure en T d'une menuiserie de type cadre dormant ou ouvrant, comprenant un clameau monté mobile sur un support, d'une part en rotation entre une première position angulaire de montage et au moins une autre position angulaire de retenue, sous l'action d'une vis de serrage coopérant avec le clameau et ledit support, ledit dispositif étant encore pourvu de moyens de retenue escamotables du clameau en position angulaire de montage

La présente invention concerne le domaine de la quincaillerie du bâtiment et a trait, plus particulièrement, aux dispositifs destinés à contribuer à la fixation d'une ferrure quelconque dans une rainure en T. De telles rainures sont généralement ménagées dans des profilés en matériaux synthétiques ou métalliques, notamment en aluminium, pour la conception de menuiseries du bâtiment, par exemple le cadre dormant et/ou le châssis ouvrant d'une porte, fenêtre ou similaire.

A ce propos, il est plus particulièrement connu par le document EP3263813 un tel dispositif pour la fixation d'une ferrure dans une rainure en T comportant des moyens de serrage sous forme d'un clameau prévu pour coopérer avec les rebords d'accrochage qui définissent l'embouchure d'une telle rainure en T, encore délimitée par deux parois latérales s'étendant depuis un fond.

Plus particulièrement, ce clameau est en liaison avec une vis de serrage traversant un support auquel est associé ledit dispositif de fixation. Au travers de cette vis de serrage, il est possible d'amener le clameau depuis une première position inactive autorisant son engagement entre les rebords d'accrochage de la rainure en T, dans une position active dans laquelle il vient s'étendre, par rotation, sous ces rebords d'accrochage.

La particularité de ce dispositif de fixation décrit dans ce document EP3263813 consiste en ce qu'il comporte encore des moyens de retenue en rotation escamotables du clameau dans sa première position inactive. Au travers de tels moyens, le montage sur une rainure en T d'une ferrure, quelle que soit la forme ou la fonction de cette dernière, est grandement facilité. En effet, par leur intermédiaire, l'opérateur peut être assuré lors de ce montage que le clameau est dans sa position inactive facilitant son engagement dans la rainure.

Ces moyens de retenue en rotation escamotables se présentent, dans ce cas, sous forme d'une ou plusieurs languettes en mesure de coopérer avec la périphérie du clameau, voire sous forme d'un clip élastiquement compressible venant s'engager dans une encoche que comporte de manière adaptée le clameau lorsque celui-ci est dans sa position inactive. Selon cet état de la technique, le dispositif de fixation comporte encore des moyens formant une butée temporaire consistant en une entretoise pour maintenir le clameau dans une position desserrée dans sa position inactive d'engagement dans la rainure en T.

L'avantage d'une telle configuration consiste en ce que l'opérateur, lors du montage de la ferrure est assuré que le clameau est dans une position desserrée suffisante pour que, par action sur la vis de serrage et rotation de ce clameau, celui-ci soit effectivement en mesure de s'engager sous les rebords d'accrochage pour pouvoir interagir avec ces derniers.

A supposer, en effet, que l'opérateur resserre la vis sans que le clameau soit engagé sous les rebords d'accrochage, la ferrure n'est pas convenablement fixée sur la menuiserie. Surtout, cet opérateur ne peut s'en assurer dans la mesure où, comme le révèle le document EP3263813, un tel dispositif de fixation comporte souvent des moyens de pré-montage et pré-positionnement, notamment par clippage dans la rainure en T. Au travers de tels moyens de pré-montage et de pré-positionnement, la ferrure équipée d'un tel dispositif de fixation semble fixée sur la menuiserie, mais de manière inadaptée pour résister à des contraintes par tentative d'effraction, de vents violents ou autres....si le clameau n'est pas en engagement convenable avec la rainure.

En somme, ces moyens de pré-montage et de pré-positionnement ont une fonction de maintien en position de la ferrure sur la menuiserie, le temps d'assurer la fixation proprement dite au moyen de l'ensemble vis de serrage - clameau. De tels moyens de pré-montage et de pré-positionnement facilitent, également, le repositionnement éventuellement nécessaire de la ferrure sur la menuiserie.

S'il semble possible de vérifier la bonne fixation d'une ferrure ne comportant qu'un seul dispositif de fixation à clameau, une vérification certaine est impossible dans le cas d'une ferrure comportant une multiplicité de ces dispositifs de fixation à clameau. En effet, certains peuvent se resserrer convenablement sur les rebords d'accrochage de la rainure en T, tandis que d'autres, non, de sorte que la tenue mécanique procurée par ladite ferrure dans ce cas est nécessairement de moindre qualité.

A ce propos, les moyens formant butée temporaire sous forme d'une entretoise prévus dans la solution selon l'état de la technique semblent répondre au problème en assurant le maintien du clameau dans une position desserrée dans sa position inactive d'engagement dans la rainure en T. En effet, ces moyens permettent de s'assurer que ce clameau est en mesure de s'engager sous les rebords d'accrochage de manière certaine, étant nécessairement dans une position desserrée adaptée. Cependant, là encore, cette solution selon l'état de la technique apporte un degré d'insécurité auquel la présente invention se veut à même de répondre.

En effet, en combinaison avec ces moyens formant butée temporaire sous forme d'entretoise, le dispositif de fixation selon l'état de la technique comporte, comme indiqué préalablement, des moyens de retenue en rotation escamotables empruntant la forme de languette ou de clip coopérant sous contrainte avec la périphérie du clameau lorsque celui-ci est dans sa position angulaire de montage. Pour échapper à cette contrainte de la ou des languette (s), voire du ou des clip(s), il ne peut être fait appel qu'à l'action de la vis de serrage sur le clameau, celui-ci étant totalement inaccessible et invisible une fois la ferrure montée sur la rainure en T. Il est donc nécessaire qu'une résistance importante à la rotation lie le clameau à la vis de serrage, afin que celle-ci puisse entraîner ce clameau jusqu'à le dégager des moyens de retenue escamotable, ceci avant que toute action de serrage intervienne. En effet, si cette action de serrage devait intervenir avant même que le clameau soit dégagé, celui-ci pourrait se resserrer et se bloquer sur l'entretoise qui le maintien en position desserrée.

Cette résistance à la rotation peut, par la suite, gêner l'action de serrage elle-même.

Si la solution selon l'état de la technique répond d'ores et déjà grandement à la problématique de la fixation d'éléments de ferrure dans une rainure en T d'une menuiserie, tout en évitant les vis classiques perforant cette menuiserie, la présente invention a pour but de proposer une solution plus efficace encore, pour davantage de sérénité pour l'opérateur ayant à équiper, de manière sûre, une menuiserie de ferrures, qu'elles soient de verrouillage ou autre au moyen de dispositifs de fixation comportant un tel clameau. EP2159356 divulgue également un exemple d'un dispositif de fixation.

C'est dans le cadre d'une démarche inventive que l'on a imaginé intervenir non pas sur le clameau pour maintenir celui-ci en position desserrée, mais sur la vis de serrage, en immobilisant celle-ci en translation, ceci de manière escamotable.

Surtout, en agissant sur la vis de serrage, il devient beaucoup plus aisé de maintenir le clameau dans sa position inactive de montage sans faire appel à des clips ou des languettes dont il convient de vaincre la résistance de retenue pour libérer le clameau de leur emprise et lui permettre de quitter sa position inactive de manière à gagner sa position active de fixation.

En particulier, dans le cadre d'une conception avantageuse, ces moyens escamotables de blocage viennent également immobiliser en rotation la vis de serrage et, de fait, le clameau.

Ainsi, l'invention un dispositif de fixation pour ferrure dans une rainure en T d'une menuiserie de type cadre dormant ou ouvrant, comprenant un clameau monté mobile sur un support, d'une part en rotation, entre une position angulaire de montage et au moins une autre position angulaire de retenue, sous l'action d'une vis de serrage traversant une ouverture que comporte le support, cette vis de serrage coopérant avec le clameau et ledit support, ce dispositif comportant encore des moyens escamotables de blocage au moins en translation de la vis de serrage par rapport à ce support définis par des moyens de retenue de la vis de serrage dans une position desserrée et repoussée partiellement en dehors de l'ouverture dans le support, pour maintenir la tête de cette vis de serrage à une distance écartée d'une face d'appui sur ce support, lesdits moyens escamotables de blocage constituant des moyens de maintien du clameau en appui sur une face du support opposée à la face d'appui, ladite face opposée comprenant au moins une butée correspondant à des moyens de retenue escamotables de ce clameau en position angulaire de montage.

Selon une autre particularité de l'invention, il est encore pourvu de moyens escamotables de blocage en rotation de la vis de serrage par rapport audit support.

Tout particulièrement et de manière avantageuse, lesdits moyens escamotables de blocage en translation constituent substantiellement les moyens escamotables de blocage en rotation de la vis de serrage.

Les avantages découlant de la présente invention apparaîtront au cours de la description qui va suivre se rapportant à un exemple de réalisation.

La compréhension de cette description sera facilitée en se référant aux dessins ci-joints, dans lesquels :
- la figure 1 est une représentation schématisée et en coupe d'un exemple de rainure en T de menuiserie recevant une ferrure solidarisée au moyen d'un dispositif de fixation selon l'invention ;
- la figure 2 est une vue schématisée partielle et en perspective d'un exemple de support sous forme d'une gâche équipée d'un dispositif de fixation selon l'invention,
- la figure 3 est une représentation similaire sur laquelle on voit le clameau en position angulaire de montage,
- la figure 4 est là encore une vue similaire aux deux précédentes sur laquelle on voit la vis de serrage et sa coopération avec les moyens escamotable de blocage sous forme d'une languette de retenue,
- la figure 5 est une représentation en coupe du dispositif de fixation selon l'invention, le clameau étant en position angulaire de montage et la vis de serrage soumise à l'action des moyens de blocage escamotables,
- la figure 6 est une vue de dessous de la figure 5,
- la figure 7 est une représentation schématisée similaire à la figure 5 après déblocage de la vis de serrage,
- la figure 8 correspond à une vue de dessous de cette figure 7 illustrant un clameau toujours dans sa position angulaire de montage,
- la figure 9 illustre le dispositif de fixation, vu en coupe, le clameau en position angulaire de retenue et la vis de serrage resserrée,
- la figure 10 illustre cette position angulaire de retenue du clameau et correspond à une vue de dessous de la figure 9.

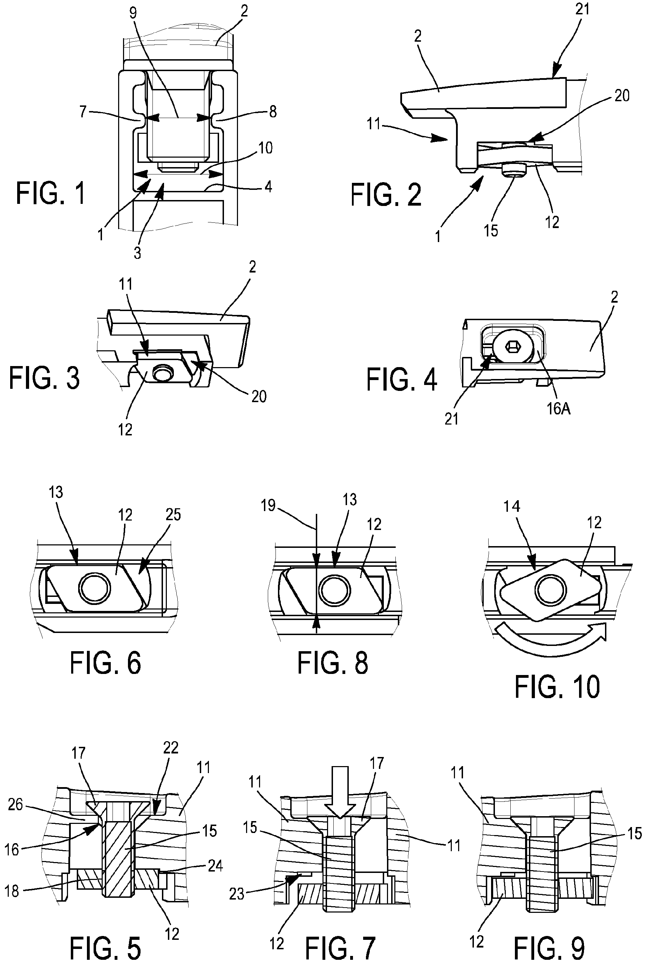

Telle que représentée dans les différentes figures des dessins ci-joints et en particulier dans les figures 1 et 4, la présente invention a trait à un dispositif de fixation 1 pour ferrure de menuiserie de type porte, fenêtre ou similaire.

Ainsi, ce dispositif de fixation 1 peut équiper tout type de ferrure telle que gâche, comme illustré dans les figures 2 à 4, crémone, serrure, ferrure d'articulation ou autre, dès l'instant que cette ferrure est destinée à être montée dans une rainure en T 3. Celle-ci est schématiquement illustrée dans la figure 1. Elle est généralement ménagée en en feuillure de cadre dormant ou d'ouvrant.

Une telle rainure en T 3 comporte un fond 4 d'où s'étendent, de part et d'autre, des parois latérales 5, 6 portant, en direction du plan médian de cette rainure en T 3, un rebord d'accrochage 7, 8 délimitant l'embouchure de cette dernière sous forme d'une largeur 9 de passage réduite par rapport à la largeur interne 10 de la rainure.

Plutôt que de parler de ferrure dont est équipé le dispositif de fixation 1 selon l'invention, il est systématiquement fait référence, dans la suite de la description, à un support 11 lequel peut être défini par cette ferrure elle-même ou une pièce intermédiaire venant équiper ladite ferrure.

De manière plus particulière, ce dispositif de fixation 1 comprend un clameau 12 visible dans toutes les figures, lequel est monté mobile sous le support 11, d'une part, en rotation, entre une première position angulaire de montage 13 et au moins une autre position angulaire de retenue 14, ceci sous l'action d'une vis de serrage 15 coopérant avec le clameau 12 et ledit support 11.

Très concrètement, le support 11 comporte une ouverture 16 de passage de cette vis de serrage 15 de sorte qu'un usager puisse intervenir sur la tête 17 de cette vis de serrage 15, ceci d'un côté du support 11, sachant que le clameau 12 est disposé du côté opposé de ce dernier et comporte un orifice fileté 18, de manière à être vissé sur cette vis de serrage 15.

La position angulaire de montage 13 du clameau 12 par rapport audit support 11 est celle dans laquelle ce clameau 12 vient se positionner dans l'alignement de la rainure en T 3 au moment du montage sur cette dernière du support 11, en l'occurrence de la ferrure 2. Dans cette position angulaire de montage 13, le clameau 12 présente une largeur 19 inférieure à la largeur de passage 9 entre les rebords d'accrochage 7, 8 de cette rainure en T 3 de manière à pouvoir s'engager dans cette dernière.

Dans la position angulaire de retenue 14 sous le support 11, ce clameau 12 vient s'étendre sous ces rebords d'accrochage 7, 8 sur lesquels il peut être resserré par action de serrage sur la vis 15.

Ce dispositif de fixation 1 comporte encore des moyens de retenue escamotables 20 par rapport au support 11 du clameau 12 en position angulaire de montage 13. De tels moyens 20 présentent l'avantage d'assurer à l'opérateur, lors du montage de la ferrure sur la menuiserie, que le clameau 12 est en bonne position sous le support 11 pour son engagement dans la rainure en T 3.

Le dispositif de fixation 1 comporte en outre des moyens escamotables de blocage 21 au moins en translation de la vis de serrage 15 par rapport à ce support 11.

Préférentiellement il est encore pourvu de moyens escamotables de blocage en rotation de la vis de serrage par rapport à ce support 11.

Tout particulièrement et de manière avantageuse, lesdits moyens escamotables de blocage en translation constituent substantiellement les moyens escamotables de blocage en rotation de la vis de serrage par rapport audit support 11.

Plus particulièrement de tels moyens escamotables de blocage 21 assurent également une immobilisation en rotation, de manière escamotable de cette vis de serrage 15 sur ce support 11.

Avantageusement encore, ces moyens escamotables de blocage 21 sont définis par des moyens de retenue de la vis de serrage 15 dans une position desserrée et repoussée partiellement en dehors de l'ouverture 16 dans le support 11, pour maintenir la tête 17 de cette vis de serrage 15 à une distance d écartée d'une face d'appui 22 sur ce support 11.

Les moyens escamotables de blocage 21 constituent en même temps des moyens de maintien du clameau 12 en appui sur une face 23 du support 11 opposée à la face d'appui 22, notamment du fait du montage du clameau 12 sur la vis de serrage 15 sous le support 11, sur ce côté opposé 23. Celle-ci est préférentiellement équipée d'au moins une butée 24 apte à définir les moyens de retenue escamotables 20 de ce clameau 12 en position angulaire de montage 13.

Concrètement, au niveau de cette face opposée 23 du support 11, celui-ci présente une empreinte 25 de logement du clameau 12 dans cette position angulaire de montage 13 de manière à empêcher toute rotation de ce clameau 12. Une telle empreinte définit au moins une butée 24 de blocage en rotation du clameau 12

Substantiellement, les moyens escamotables de blocage 21 peuvent emprunter différentes formes de réalisation, par exemple celle d'une languette de retenue préférentiellement de type sécable ou escamotable qui, par action sur le clameau 12 et/ou la vis de serrage 15, assure toutes les fonctions requises :
- le maintien de la vis de serrage 15 dans une position desserrée et repoussée partiellement en dehors de l'ouverture 16 dans le support 11, de sorte que la tête 17 de cette vis de serrage 15 soit maintenue à distance de sa face d'appui 22 sur ce support 11,
- le maintien en applique du clameau 12 contre la face opposée 23 du support 11 de manière à assurer la coopération de ce clameau 12 avec l'empreinte 25 et la ou les butée(s) 24.

Il convient d'observer que du côté de cette face d'appui 22 de la tête 17 de la vis de serrage 15, ledit support 11 comporte avantageusement un logement 16A dans lequel vient se noyer cette tête de vis 17. Pour autant ce logement 16A est défini de section suffisamment importante pour clairement laisser apparaître le positionnement desserré ou serré de la vis de serrage 15, plus exactement son positionnement partiellement ou totalement engagé dans l'ouverture 16.

Finalement ce logement 16A largement dimensionné permet au monteur de s'assurer du positionnement desserré de la vis 17 et par voie de conséquence du maintien du clameau 12 en position angulaire de montage au moment où il vient équiper une menuiserie d'une ferrure pourvue d'un dispositif de fixation selon l'invention.

On notera qu'en coopération avec la vis des serrage 15, une telle languette de retenue, préférentiellement sécable ou escamotable 26 peut encore assurer la fonction du blocage en rotation de cette vis de serrage 15 de manière à éviter que celle-ci ne soit serrée ou desserrée avant que ladite languette de retenue 26 soit sectionnée et/ou escamotée.

En somme, le mode opératoire de montage d'un support 11, par exemple d'une ferrure telle qu'une gâche illustrée dans les figures 1 et 2 dans une rainure en T 3, consiste :
- à rapporter ladite ferrure 2 sur cette rainure en T 3 en assurant l'engagement du clameau 12 du ou des dispositifs de fixation 1 dans ladite rainure en T 3, montage rendu possible grâce au maintien de ce clameau 12 dans sa position angulaire de montage 13,
- à repousser axialement la vis de serrage 15 pour amener sa tête 17 contre la face d'appui 22, ceci en assurant le sectionnement ou l'effacement de la languette de retenue 26, ayant pour conséquence de dégager ledit clameau 12 des moyens de retenue escamotables 20 tout en repoussant ce clameau 12 dans une position desserrée assurant, dans l'opération suivante, l'engagement de ce clameau 12 sous les rebords d'accrochage 7, 8,
- à visser dans le sens du serrage la vis de serrage 15 pour, dans un premier temps, pivoter le clameau 12 dans sa position angulaire de retenue 14 et resserrer ce clameau 12 sur les rebords d'accrochage 7, 8.

Tel qu'il ressort de la description qui précède, une fois la vis de serrage 15 libérée et repoussée en applique contre la face d'appui 22, la moindre résistance à la rotation assurée entre cette vis de serrage 15 et le clameau 12 permet d'amener ce dernier depuis sa position angulaire de montage 13 dans sa position angulaire de retenue 14. En particulier cette résistance à la rotation peut être déterminée de sorte qu'elle ne soit pas une contrainte excessive au serrage de la vis de serrage 15.

Par ailleurs, en bloquant temporairement dans toutes les directions la vis de serrage 15, on évite tout défaut de montage d'une ferrure sur une rainure en T qui résulterait d'une erreur de manipulation et d'intervention sur une quelconque vis de serrage 15 avant qu'intervienne cette opération de montage.

En somme, la présente invention permet d'apporter une solution encore plus sûre et rassurante pour le monteur venant à équiper une menuiserie de type porte ou fenêtre de ferrure équipée du dispositif de fixation à clameau, solution qui a l'avantage d'éviter tous les inconvénients de pose, de vis, de fixation classique coopérant avec le corps de la menuiserie.

## Revendications

1. Dispositif de fixation pour ferrure (1) dans une rainure en T (3) d'une menuiserie de type cadre dormant ou ouvrant, comprenant un clameau (12) monté mobile sur un support (11), d'une part en rotation, entre une position angulaire de montage (13) et au moins une autre position angulaire de retenue (14), sous l'action d'une vis de serrage (15) traversant une ouverture (16) que comporte le support (11), cette vis de serrage (15) coopérant avec le clameau (12) et ledit support (11), **caractérisé par le fait qu'**il comporte des moyens escamotables de blocage (21) au moins en translation de la vis de serrage (15) par rapport à ce support (11) définis par des moyens de retenue de la vis de serrage (15) dans une position desserrée et repoussée partiellement en dehors de l'ouverture (16) dans le support (11), pour maintenir la tête (17) de cette vis de serrage (15) à une distance écartée d'une face d'appui (22) sur ce support (11), lesdits moyens escamotables de blocage (21) constituant des moyens de maintien du clameau (12) en appui sur une face (23) du support (11) opposée à la face d'appui (22), ladite face opposée (23) comprenant au moins une butée (24) correspondant à des moyens de retenue escamotables (20) de ce clameau (12) en position angulaire de montage (13).

2. Dispositif de fixation (1) selon la revendication 1, **caractérisé en ce qu'**il comporte en outre des moyens escamotables de blocage en rotation de la vis de serrage par rapport au support (11).

3. Dispositif de fixation (1) selon les revendications 1 et 2, caractérisé en ce lesdits moyens escamotables de blocage (21) en translation par rapport au support (11) constituent substantiellement les moyens escamotables de blocage en rotation de la vis de serrage par rapport à ce support (11).

4. Dispositif de fixation (1) selon l'une des revendications précédentes, **caractérisé en ce que** du côté de la face d'appui (22) de la tête (17) de la vis de serrage (15), ledit support (11) comporte un logement (16A) dans lequel vient se noyer cette tête de vis (17), tout en laissant apparaitre le positionnement desserré ou serré de la vis de serrage (15), respectivement partiellement ou totalement engagé dans l'ouverture (16).

5. Dispositif de fixation (1) selon l'une des revendications précédentes, **caractérisé en ce qu'**au niveau de la face opposée (23) du support (11), celui-ci comprend une empreinte (25) de logement du clameau (12) dans la position angulaire de montage (13) de manière à empêcher toute rotation de ce clameau (12), ladite empreinte (25) définissant au moins une butée (24) de blocage en rotation du clameau (12).

6. Dispositif de fixation (1) selon l'une quelconque des revendications précédentes, **caractérisé en ce que** les moyens escamotables de blocage (21) empruntent la forme d'une languette de retenue sécable et/ou escamotable.

## Patentansprüche

1. Befestigungsvorrichtung für einen Beschlag (1) in einer T-Nut (3) einer Holzarbeit einer Art eines ruhenden oder beweglichen Rahmens, umfassend eine Bauklammer (12), die an einem Träger (11) verstellbar montiert ist, einerseits in Drehung zwischen einer Montagewinkelposition (13) und mindestens einer anderen Haltewinkelposition (14), unter Einwirkung einer Spannschraube (15), die eine Öffnung (16) passiert, die von dem Träger (11) aufgewiesen wird, wobei diese Spannschraube (15) mit der Bauklammer (12) und dem Träger (11) zusammenwirkt, **dadurch gekennzeichnet, dass** sie einziehbare Mittel (21) eines Blockierens mindestens einer Verschiebung der Spannschraube (15) bezogen auf diesen Träger (11) aufweist, die durch Haltemittel der Spannschraube (15) in einer ausgespannten Position und aus der Öffnung (16) in dem Träger (11) teilweise zurückgeschoben definiert sind, zum Erhalten des Kopfes (17) dieser Spannschraube (15) in einem Trennabstand von einer Anlagefläche (22) an diesem Träger (11), wobei die einziehbaren Mittel (21) des Blockierens Erhaltemittel der Bauklammer (12) ausmachen, die an eine Fläche (23) des Trägers (11) gegenüber der Anlagefläche (22) anliegen, die gegenüberliegende Fläche (23) umfassend mindestens einen Anschlag (24), der einziehbaren Haltemitteln (20) dieser Bauklammer (12) in der Montagewinkelposition (13) entspricht.

2. Befestigungsvorrichtung (1) nach Anspruch 1, **dadurch gekennzeichnet, dass** sie ferner einziehbare Mittel des Blockierens der Drehung der Spannschraube bezogen auf den Träger (11) aufweist.

3. Befestigungsvorrichtung (1) nach den Ansprüchen 1 und 2, **dadurch gekennzeichnet, dass** die einziehbaren Mittel (21) des Blockierens der Verschiebung bezogen auf den Träger (11) im Wesentlichen die einziehbaren Mittel des Blockierens der Drehung der Spannschraube bezogen auf den Träger (11) ausmachen.

4. Befestigungsvorrichtung (1) nach einem der vorstehenden Ansprüche, **dadurch gekennzeichnet, dass** auf der Seite der Anlagefläche (22) des Kopfes (17) der Spannschraube (15) der Träger (11) ein Gehäuse (16A) aufweist, in das sich dieser Schraubenkopf (17) einbettet, während die ausgespannte oder gespannte Positionierung der Spannschraube (15) teilweise beziehungsweise vollständig in Eingriff mit der Öffnung (16) erscheint.

5. Befestigungsvorrichtung (1) nach einem der vorstehenden Ansprüche, **dadurch gekennzeichnet, dass** auf der gegenüberliegenden Fläche (23) des Trägers (11), letzterer eine Gehäusevertiefung (25) der Bauklammer (12) in der Montagewinkelposition (13) umfasst, um jede Drehung dieser Bauklammer (12) zu verhindern, wobei die Vertiefung (25) mindestens einen Anschlag (24) des Blockierens der Drehung der Bauklammer (12) definiert.

6. Befestigungsvorrichtung (1) nach einem der vorstehenden Ansprüche, **dadurch gekennzeichnet, dass** die einziehbaren Mittel (21) des Blockierens die Form einer teilbaren und/oder einziehbaren Haltelasche übernehmen.

## Claims

1. Device for securing a fitting (1) in a T-shaped groove (3) of an outer fixed frame or opening panel type of joinery, comprising a clamp (12) which is mounted on a support (11) so as to be movable, on the one hand in rotation, between an angular mounting position (13) and at least one other angular retaining position (14), by a tightening screw (15) passing through an opening (16) in the support (11), said tightening screw (15) engaging with the clamp (12) and said support (11), **characterized in that** it comprises retractable means (21) for locking, at least against translation, the tightening screw (15) relative to said support (11), which locking means are defined by means for retaining the tightening screw (15) in a position that is loosened and partially pushed back outside the opening (16) in the support (11), in order to hold the head (17) of said tightening screw (15) at a distance from an abutment face (22) on said support (11), said retractable locking means (21) constituting means for holding the clamp (12) in abutment on a face (23) of the support (11) opposite the abutment face (22), said opposite face (23) comprising at least one stop (24) corresponding to retractable means (20) for retaining said clamp (12) in the angular mounting position (13).

2. Securing device (1) according to claim 1, **characterized in that** it further comprises retractable means for locking the tightening screw against rotation relative to the support (11).

3. Securing device (1) according to claims 1 and 2, **characterized in that** said retractable means (21) for locking against translation relative to the support (11) substantially constitute the retractable means for locking the tightening screw against rotation relative to said support (11).

4. Securing device (1) according to any of the preceding claims, **characterized in that**, on the side of the abutment face (22) for the head (17) of the tightening screw (15), said support (11) comprises a cavity (16A) in which said screw head (17) is embedded, while allowing the loosened or tightened setting of the tightening screw (15) to be seen, respectively partially or completely engaged in the opening (16).

5. Securing device (1) according to any of the preceding claims, **characterized in that**, on the opposite face (23) of the support (11), the support comprises a recess (25) for receiving the clamp (12) in the angular mounting position (13) so as to prevent any rotation of said clamp (12), said recess (25) defining at least one stop (24) for locking the clamp (12) against rotation.

6. Securing device (1) according to any of the preceding claims, **characterized in that** the retractable locking means (21) take the form of a breakable and/or retractable retaining tab.
